# EUROPEAN PATENT APPLICATION

(11) **EP 0 670 650 A1**
(43) Date of publication of application: **06.09.1995**
(21) Application number: 95102958.6
(22) Date of filing: 02.03.1995
(51) Int. Cl.: H04M 11/00

(54) **Portable communications interface network**

(30) Priority: 04.03.1994 MY 9400521
(71) Applicant: MOTOROLA, INC., Schaumburg, IL 60196 (US)
(72) Inventor: Wong, Sie Hui Samuel, Singapore 0511 (SG); Chai, Min Tan Daniel, Singapore 2776 (SG)
(74) Representative: Hudson, Peter David

(57) **Abstract**

A CT2 wireless to fixed telephone linked computer communication system (100) for a portable personal computer (120) connected to a modem (121) for entering or receiving a data signal. The modem which can modulate and demodulate the data signal provides public telephone accessing control signals for accessing a public telephone network (103) by way of a public telephone network port (125). The system includes a transceiver (104, 115) for accessing a radio-frequency link (134) with the public telephone network (103), in response to radio-frequency link accessing control signals (127) generated by a portable communications interface (110) that is connected to the public telephone network port and the transceiver.

## Description

### Background

Generally, the present invention relates to communication interfacing systems and more particularly to the interface of a radio linked landlined telephone jack and a portable computer.

Modems, in general, require a direct connection of their two wired port (tip and ring) to the corresponding two wired port of the telephone communication (Telecom) jack or interface for communications through a telephone line. Even if the modem is internally mounted within a portable personal computer (PC), the computer having the Telecom port still needs to be hooked up directly to a phone-jack for land-line phone communication. Hence, modem usage with such a personal computer is restricted to the area near a telephone jack. This phone-jack hook-up requirement makes the modem usage extremely immobile for a portable computer user.

In prior art systems, radio frequency (RF) modems and other dedicated wireless devices have been mounted within the PC. Other wireless features have been added externally, as a card, or provided internally to an electronic device, to form a dedicated or otherwise enhanced facsimile machine or a specialized pager, such as a news receiver. However, instead of buying an off-the-shelf or standard pager, computer, or facsimile machine, a more expensive specialized pager or computer has to be purchased for this modem RF capability.

Prior art cellular and other radio transceiver phone-line systems have also been adapted for use with modem linked computers. However, no modem interface has been adapted for use with a low-cost, low power cordless telephone second generation CT2 system. Accordingly, there is a need to provide greater mobility for standard off-the-shelf computer modem usage in a CT2 system.

### Summary of the Invention

Briefly, according to the invention, there is provided a CT2 wireless to fixed telephone linked computer communication system for a portable personal computer connected to a modem for entering or receiving a data signal. The modem which can modulate and demodulate the data signal provides public telephone accessing control signals for accessing a public telephone network by way of a public telephone network port. The system includes a transceiver for accessing a radio-frequency link with the public telephone network, in response to radio-frequency link accessing control signals generated by a portable communications interface that is connected to the public telephone network port and the transceiver.

### Brief Description of the Drawings

FIG. 1 is a block diagram of a hybrid wireless to fixed telephone linked computer communication system, in accordance with the present invention.

FIG. 2 is a flow diagram for activating the system of FIG. 1.

FIG. 3 is a block diagram of an alternate embodiment of a hybrid wireless to fixed telephone linked computer communication system, in accordance with the present invention.

FIG. 4 is a flow diagram for activating the system of FIG. 3.

### Detailed Description of the Preferred Embodiment

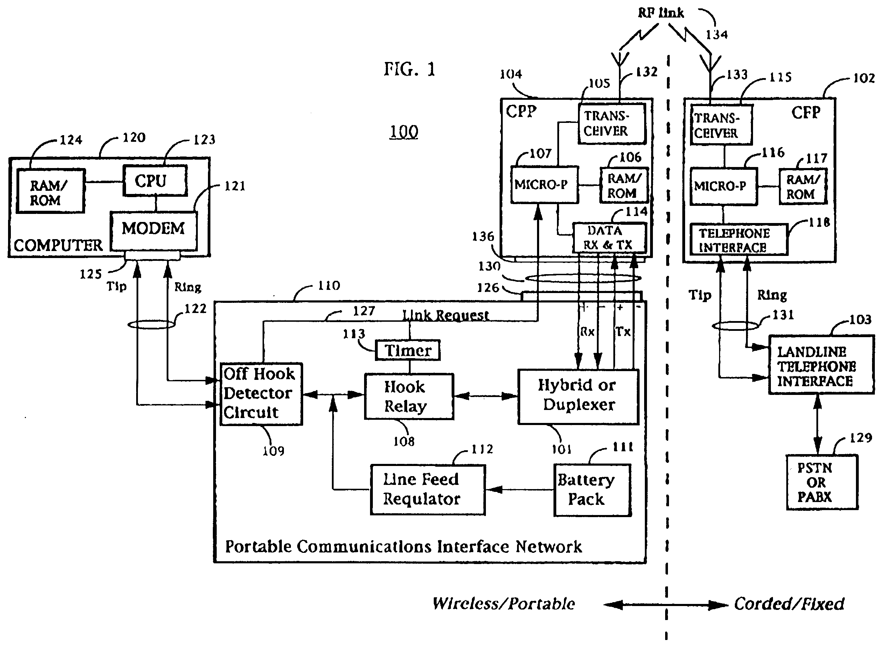

Referring to FIG. 1, a portable communications interface network 110 connects a portable personal computer (PC) 120 to a cordless portable part (CPP) 104 which is linked to its cordless fixed part (CFP) 102. The portable personal computer 120 may be any programmable computing device, such as a hand-held calculator or portable computer. A communication resource, such as a radio-frequency (RF) channel 134 links the handset 104 and base 102. In turn, the base 102 is connected to a landline telephone jack or interface 103 for interfacing to the landline telephone resource 129, such as a Public Service Telephone Network (PSTN) or a Private Access Branch Exchange (PABX). Electronic messages such as electronic mail, fax messages, paging information and any other message usually sent by a PC and a conventional landline modem 121 can now be transmitted over this hybrid fixed landline and wireless handset modem linked computer communication system 100.

The base unit 102 having a two-wired telephone jack or interface 118 is connected to a landline telephone interface 103 by a standard landline telephone cable 131 having RJ11 connectors at each end for providing public telephone accessing control signals.

On the other end, the handset 104 includes a data Rx & Tx unit 114 for receiving and transmitting data for processing the modem communication and a modified handset-to-interface connector 136 adapted for the required number of ports. A conventional Motorola, Inc. CT2 handset already has analog receiving lines (Rx+, Rx-) connected to a speaker (not shown) and analog transmitting lines (Tx+, Rx-) connected to a microphone (not shown). In accordance with the present invention, these same receiving and transmitting lines are now brought out of the handset for coupling to the line converter 101.

The CPP communication unit or handset 104 and the base 102 may follow the cordless telephone second generation (CT2) protocol, as being only one example of a possible communication standard. In this case, the cordless portable part (CPP) 104 is a CT2 wireless handset which is RF linked to its cordless fixed CT2 private or public base station 102. In accordance with the interface teachings of the present invention, a conventional Motorola, Inc. CT2 handset may be used as is, with only a slight modification needed. Lines to the microprocessor 107 and the data Rx and Tx unit 114 will have to brought out to the port 136. Both the handset 104 and the corresponding base 102, include a memory device 106, 117, a microprocessor unit 107, 116 and a transceiver 105, 115 for transmitting or receiving communication signals.

The portable communications interface network 110 includes a line converter 101, that can be hardware implemented as a hybrid, a duplexer, or by any other hardware implementation to substitute in an RF linked landline connection instead of the conventional landline telephone interface 103 connection. Line converter 101, in the form of a Motorola, Inc. integrated circuit TCA3388 or MC34114 device, basically converts or passes the signals from a two-wired telephone communication (telco) port (having Tip and Ring lines) 122 to a four-wired port (RX+, RX-,TX+,TX-).

The Tip line is a signal processing cable for analog data transmit while the Ring line is a signal processing cable for analog data receive. When the computer 120 and the modem 121 are connected to the landline telephone interface 103 via the interface network 110 and the CT2 RF link of the present invention, between the handset 104 and the base 102, the modem 121 will generate the public telephone accessing control signals, such as the standard dual tone multi-frequency (DTMF) telephone control signals on the Tip and Ring lines to place calls, and will then transfer data over the tip and ring lines and over the CT2 RF link.

The portable communications interface network 110, which may be a stand-alone device, comprises an off-hook detector circuit 109, a hook relay circuit 108, a delay timer 113, a hybrid or duplexer 101, and a line feed regulator 112. The off-hook detector 109 may have either current sensing or voltage sensing circuitry and when activated, generates a radio-frequency link accessing control signal, such as a link request TTL signal 127, to microprocessor 107 of the CPP 104. The hook relay 108 may be a conventional solid state relay switch. For portability, a battery pack 111, providing approximately 6 volts from four AA-size alkaline batteries, for example, supplies the line-feed power regulator 112 to provide a line voltage of about 50 volts at no load.

A five-wired cable 130 connects a link request TTL logic port of the microprocessor 107 to an off-hook detector circuit of the interface network 110 and also connects the four wired port of the data RX and TX unit 114 to the hybrid or duplexer 101 to allow RX and TX data or message transmission.

The portable personal computer (PC) 120 includes a built-in modem 121, a microprocessor unit 123, and a memory element 124 for providing public telephone accessing control signals to data signals entered by the computer 120, such as by a user command on a keyboard. Alternately, the modem could be externally connected to the computer 120. A standard landline telephone cable 122 having RJ11 connectors at each end connect the modem 121 through a public telephone network port 125 to the Off-hook Detector circuit 109 of the portable communications interface network 110.

The memory elements 106, 117, 124 may be of a RAM, ROM or any type of a digital information storage device, while the microprocessing devices 107, 116, 123 may be any one from a family of known PCs, microprocessors, microcontrollers, or microcomputers. It may be appreciated by one of ordinary skill in the art that other radio functions not herein described may be provided by any suitable means, including the controller 107 and 116, which controls the entire operation of the radio handset 104 and base 115, respectively.

In the transmit mode, the TX data, including the tip and ring information, coming from the computer 120 via the portable communications interface network 110 is used to modulate a carrier signal as is well known in the art. The transmitter of the transceiver 105 transmits the modulated component, such as the tip and ring information preceding a faxed message, via an antenna 132 to the receiver section of the transceiver 115 of the base unit 102 which then transmits the tip and ring information preceding the faxed message through the landline telephone interface 103. The tip and ring information is thus transmitted over-the-air to simulate a landline linked connection.

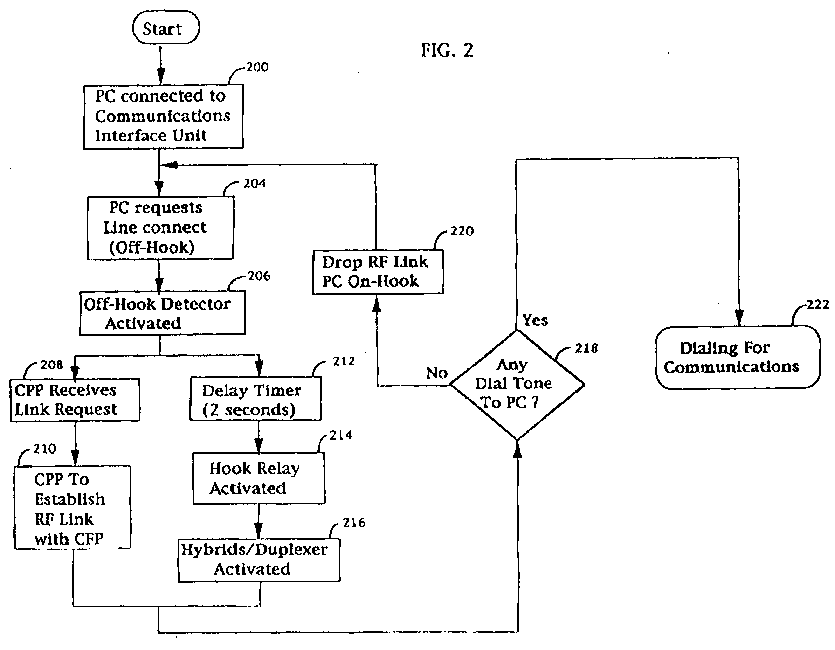

FIG. 2 illustrates a logic diagram that may be used to implement the present invention. Referring to both FIGs. 1 and 2, the computer 120 with modem 121 is connected to the portable communications interface network 110 in step 200, as directed by a user on the PC to connect the modem to the phone line before waiting for a dial tone, in order to send a message over the system. Computer 120 then initiates the line connect by sending out an off-hook command through modem 121 as any present computer with modem would normally do, as shown in block 204. In block 206, the off-hook detector 109 is activated and sends a link request TTL signal to microprocessor 107 of CPP 104.

Upon receiving the link request logic signal as shown in block 208, CPP 104 establishes an RF link with CFP 102 as shown in block 210. Meanwhile, in block 212, the delay timer 113 delays the link request logic signal from reaching the hook relay 108 for about 2 seconds, assuming an RF link will be established by then. Upon receiving the logic signal, the hook relay 108 turns ON, providing the connection between the computer 120 and hybrids or duplexer 101 as shown in block 214. In block 216, the hybrids or duplexer 101 is activated as soon as the line feed voltage comes through the hook relay 108.

In block 218, with the path connected from the computer 120 to the CPP 104 which by now is RF linked with CFP 102, the computer 120 is ready to receive a telephone dial tone from the landline telephone interface 103. If there is no dial tone which could mean that the phone line is engaged, computer 120 would be on-hooked and the RF link would be dropped as the link request signal is reversed, in block 220. If any communication is required, the process would start all over again from block 204. On the other hand, if the computer 120 receives the dial tone, which means that the RF link is established with the communication path fully connected to the landline telephone interface 103, the computer 120 with the internal modem 121 could start dialing for communications as shown in block 222.

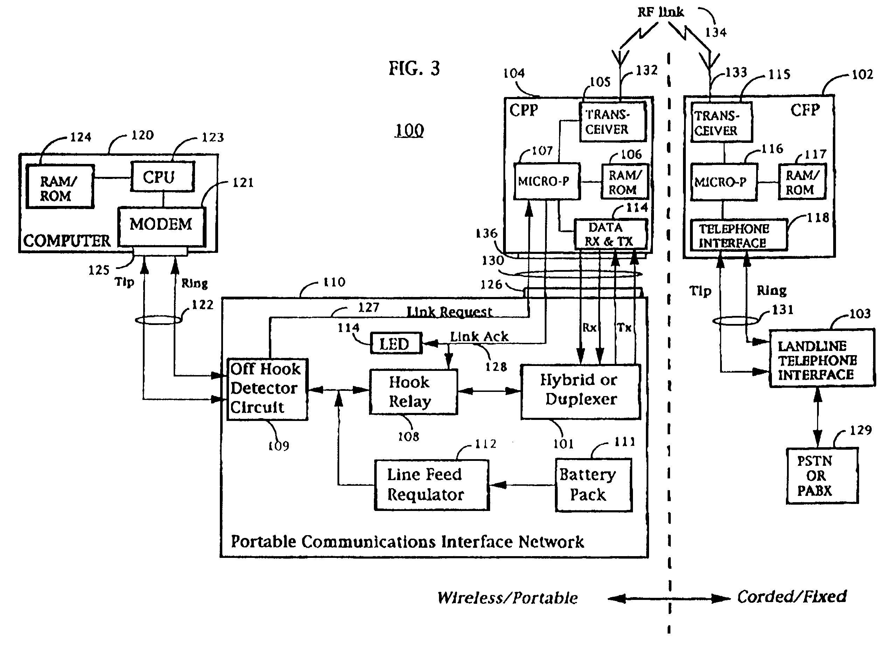

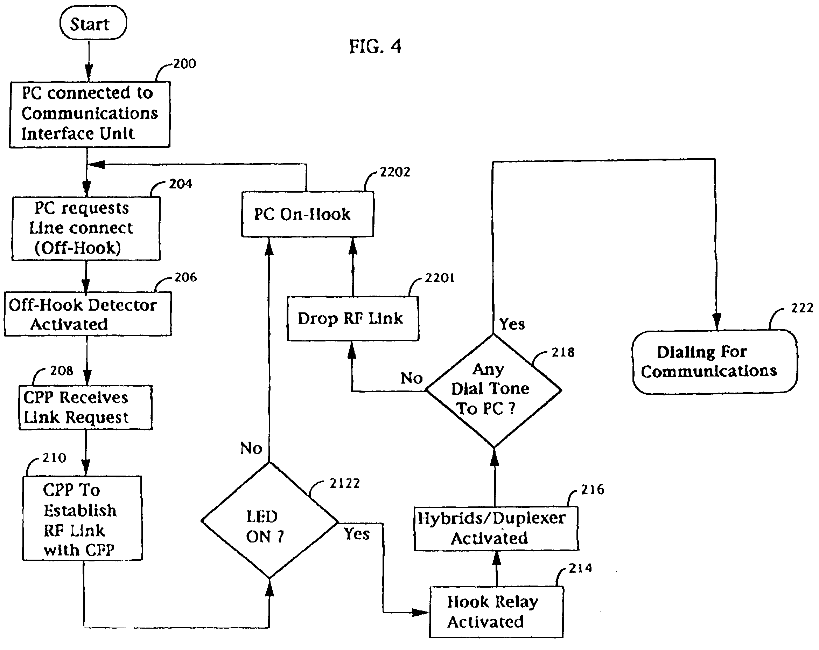

Referring to FIGS. 3 and 4, an alternative approach utilizes an extra line, Link Acknowledge (Link Ack) 128, from the microprocessor 107 to the interface network 110. Instead of using the link request 127 and the timer 113 of FIG. 1 to turn on the hook relay 108 after a delay of few seconds from the link request, the link acknowledge line now turns on the hook relay. The microprocessor 107 senses the link request logic signal coming to it and initiates the radio link. After the RF link has been established, the microprocessor 107 sends a link ack signal out to the interface network 110. Meanwhile, the link ack line would turn ON an optional indicator, such as an light emitting diode (LED) 114 to show the user that an RF link has been established, if desired.

Since the modem connection is wireless, the user has to wait for both the RF link (2122) and dial tone (218) to happen before sending (222) the message. Otherwise, if there is no dial tone, computer 120 would be on-hooked (2202) and the RF link would be dropped (2201) as the link acknowledge signal is not received, as indicated by the LED (2122).

In summary, the present invention provides a system for a conventional computer to phone-line communications by way of a wireless interface communication system. Specifically, the present invention provides wireless handset to landline linked communications with a conventional landline modem connected portable computer in a second generation cordless telephone standard CT2 system. Tip and ring information from the modem is first converted to Rx data signal in a 2-to-4-wire conversion by the hybrid such that the handset could transmit the data over the RF link to the base. Meanwhile, the off-hook detector circuit fools the modem by presenting the telephone line voltage (about 50V at no load) from the regulator to the modem. The base then provides the tip and ring information to the landline by doing a corresponding 4-to-2-wire conversion within its telephone interface. With such a low-cost system, portability is greatly enhanced without substantially increasing costs. By providing such a wireless interface to the modem connection via a CT2 handset, a user of the off-the-shelf portable computer can move around without regard to phone-cord locations.

## Claims

1. A wireless CT2 modem communication system for a portable personal computer having a landline modem for receiving a data signal and providing public telephone accessing control signals through a public telephone network port, for accessing a public telephone network by way of a CT2 transceiver, in response to the public telephone accessing control signals, the modem modulating and demodulating the data signal, the CT2 transceiver for accessing a radio-frequency link with the public telephone network, in response to radio-frequency link accessing control signals, the system comprising:
a portable communications interface for coupling to the public telephone network port of the modem and for coupling to the CT2 transceiver for accessing the public telephone network by generating the radio-frequency link accessing control signals in response to the public telephone accessing control signals.

2. The communication system of claim 1, wherein the portable communications interface comprises:
a line converter for processing the signals from the public telephone network port to the transceiver, in response to a converter activation signal;
an off-hook detector, connected to the public telephone network port and the transceiver, for generating a radio-frequency link accessing control signal in response to detection of the public telephone accessing control signals; and
a hook relay, connected between the detector and the converter, for relaying the public telephone accessing control signals to the line converter and for generating the converter activation signal, after a delay timed from the generation of the radio-frequency link accessing control signal.

3. The communication system of claim 1, wherein the portable communications interface comprises:
a line converter for processing the signals from the public telephone network port to the transceiver, in response to a converter activation signal;
an off-hook detector, connected to the public telephone network port and the transceiver, for generating a radio-frequency link accessing control signal in response to detection of the public telephone accessing control signals;
a transceiver port for receiving a radio frequency link acknowledge signal; and
a hook relay, connected between the detector and the converter, for relaying the public telephone accessing control signals to the line converter and for generating the converter activation signal in response to the radio frequency link acknowledge signal.

4. The communication system of claim 1, wherein the public telephone accessing control signals comprises DTMF tones and the CT2 transceiver transmits the DTMF tones over the radio-frequency link.

5. A portable communications interface comprising:
a landline telephone communication port for providing telephone communication signals;
a transceiver port;
a line converter for processing the signals from the telephone communication port to the transceiver port, in response to a converter activation signal;
an off-hook detector, connected to the telephone communication port and the transceiver port, for generating a radio-frequency link accessing control signal in response to detection of the telephone communication signals; and
a hook relay, connected between the detector and the converter, for relaying the telephone communication signals to the line converter and for generating the converter activation signal, after a delay timed from the generation of the radio-frequency link accessing control signal.

6. The portable communications interface of claim 5 further comprising:
a battery source for powering the converter, in response to the converter activation signal; and
a timer for providing the delay in generation of the converter activation signal.

7. A hybrid wireless to fixed telephone linked computer CT2 communication system comprising:
a portable personal computer for processing a data signal;
a landline modem, connected to the computer, the modem having a public telephone network port for modulating and demodulating the data signal and for providing public telephone accessing control signals for accessing a public telephone network;
a CT2 base having a landline connected to the public telephone network;
a CT2 radio handset radio frequency linked to the base for accessing a radio-frequency link with the landline of the public telephone network, in response to radio-frequency link accessing control signals; and
a portable communications interface connected to the public telephone network port and the handset for generating the radio-frequency link accessing control signals in response to the public telephone accessing control signals.

8. The communication system of claim 7 wherein the public telephone accessing control signals comprises tip and ring information for transmission over the radio-frequency link.
